# FASCICULE DE BREVET EUROPEEN

(11) **EP 1 135 987 B1**
(45) Date de publication et mention de la délivrance du brevet: **02.04.2003**
(21) Numéro de dépôt: 01400125.9
(22) Date de dépôt: 17.01.2001
(51) Int. Cl.: A22B 5/00

(54) **Dispositif de maintien pour l'arrachage des pannes**
Haltevorrichtung zum Abtrennen von Fettstreifen
Holding device for pulling fat leaves

(30) Priorité: 15.03.2000 FR 0003317
(43) Date de publication de la demande: 26.09.2001
(73) Titulaire: DURAND INTERNATIONAL, 07210 Baix Chomerac (FR)
(72) Inventeur: Torrelli, Didier, 07500 Guilherand Granges (FR)
(74) Mandataire: Geismar, Thierry

(56) Documents cités:
- EP-A- 0 330 593
- US-A- 5 411 435

## Description

L'invention concerne l'arrachage d'amas de graisse en forme de couche situés sous la peau du corps d'un animal abattu, ouvert et puis éviscéré. Elle s'applique plus spécialement aux pannes de porcs. On connaît déjà des installations d'arrachage de pannes, notamment décrites dans les documents EP-A 245 183, WO 98/15186.

Dans certaines conditions, liées par exemple à des traitements ultérieurs sur les carcasses, on souhaite effectuer l'arrachage des pannes après la découpe de la carcasse en deux demi-carcasses.

Typiquement les demi-carcasses sont alors reliées au moins par une partie du corps, en particulier la tête. La carcasse est découpée à l'aide d'une scie ou d'un couteau de fendage, la découpe étant effectuée de manière à laisser subsister une partie reliant les deux demi-carcasses.

Habituellement, les animaux sont suspendus par les pattes arrière, arrivant au poste d'arrachage des pannes tête en bas.

Du fait de l'évolution de la réglementation, on est amené à devoir retirer les pannes des demi carcasses après la découpe de la carcasse en demi carcasses, et avant la pesée fiscale : les pannes doivent être présentes sur la carcasse après sa découpe en demi carcasses pour le contrôle sanitaire, mais enlevées pour la pesée fiscale des carcasses.

Or, on connaît des dispositifs d'arrachage des pannes travaillant sur des demi carcasses, mais cet arrachage présente des défauts du fait de l'action mécanique exercée lors de l'arrachage. On souhaite donc, lorsque les carcasses sont séparées ainsi en deux demi-carcasses, assurer un excellent maintien des demi-carcasses lors de l'arrachage, l'arrachage entraînant sinon des déplacements incontrôlés qui peuvent en compromettre la qualité.

Le document EP 245 183 énonce l'utilisation de moyens de maintien du type flasque appliqués sur l'animal. Le document WO 98/15186 utilise un système combinant l'aspiration et la préhension des pannes, pour obtenir un bon arrachage.

Dans certains cas, de tels moyens de maintien ne sont toujours pas suffisants pour assurer un arrachage d'excellente qualité, notamment pour des cadences d'arrachage pouvant être élevées, telles que 500 porcs par heure.

Par ailleurs, on peut vouloir procéder à un tel arrachage pour des carcasses découpées dont les têtes ont été déjointées selon un procédé tel que celui décrit dans le document FR 2 754 427, ou dont les têtes n'ont pas subi cette opération de déjointage. Les mouvements de la carcasse sont différents si les têtes ont été déjointées ou non déjointées avant l'arrachage des pannes. L'ouverture réalisée au niveau de la tête dans le cas de têtes déjointées entraîne des contraintes de balancement supplémentaires qui pour un arrachage optimal impliquent des dispositions constructives différentes des moyens de maintien. Dans le cas de carcasses avec tête non déjointée, les demi carcasses sont reliées par la tête, dans le cas de carcasses avec tête déjointée, les demi carcasses sont reliées par les joues. Les dispositifs de maintien décrits de type flasques ou moyens combinant aspiration et préhension ne sont plus suffisants.

L'invention vise un arrachage des pannes de très bonne qualité pour des animaux séparés en deux demi-carcasses, de manière adaptée pour un contrôle précis de l'arrachage et des cadences d'arrachage pouvant être élevées, pour des carcasses têtes non déjointées ou têtes déjointées.

L'invention vise également un arrachage performant pour des chaînes d'arrachage de pannes destinées à des animaux de différentes dimensions et conformations, sans endommager les carcasses découpées.

Selon un premier aspect, l'invention concerne un dispositif de maintien lors de l'arrachage d'amas de graisse en forme de couche située sous la peau du corps d'un animal abattu, ouvert et éviscéré, plus spécialement les pannes d'un porc, le dispositif étant destiné à faire partie d'une installation d'arrachage des pannes, dans laquelle l'animal est découpé en deux demi-carcasses maintenues solidaires par au moins une partie du corps notamment au niveau de la tête, l'animal étant suspendu par les pattes arrières, la tête en bas, le dispositif de maintien comprenant du côté dorsal de la carcasse un bâti de support portant de part et d'autre de la carcasse des moyens de maintien des deux demi-carcasses espacés entre eux et fixés de façon articulée au bâti, mobiles entre une première position dite d'attente dans laquelle les moyens de maintien sont libres par rapport à la carcasse, et une deuxième position dite de maintien dans laquelle ces moyens de maintien sont en appui de part et d'autre de la carcasse, et sont sensiblement symétriques par rapport au plan de symétrie de la carcasse.

Selon un premier mode de réalisation, les moyens de maintien comprennent deux bras arqués dont la convexité est tournée vers le plan de symétrie, de manière à s'appliquer contre la face externe des flancs latéraux des demi-carcasses dans la position de maintien.

Selon un mode de réalisation, les moyens de maintien comprennent en outre des moyens de retenue de la tête en position de maintien, du type bras formant crochets introduits entre les demi-carcasses, ou plaques de maintien appliquées de part et d'autre des demi-carcasses.

Selon une réalisation, les moyens de maintien sont articulés suivant des axes respectifs qui s'étendent dans un plan de support parallèle ou incliné par rapport au plan perpendiculaire au plan de symétrie de la carcasse, et qui sont inclinés dans ce plan de support d'un angle compris entre 20 et 40° par rapport à la perpendiculaire au plan de symétrie.

Le bâti de support comprend une poutre longitudinale s'étendant selon un axe de bâti inclus dans le plan de symétrie et parallèle au plan de support, l'axe de bâti étant fixe ou d'inclinaison réglable de 10° à 30° par rapport au plan vertical perpendiculaire au plan de symétrie.

Les axes des bras sont situés du côté du bâti de support situé en regard de la face dorsale de la carcasse.

Le dispositif comprend des moyens formant levier destinés au pivotement des bras de maintien par rapport aux axes d'articulation de ces bras.

Les moyens formant levier sont actionnés par des vérins à simple ou double effet, montés sur le bâti de support, aptes à amener les bras par effet de levier de la première à la deuxième position.

Les vérins sont montés sur des axes pivots parallèles au plan de symétrie, les vérins pivotant angulairement autour de ces axes lors du passage de la première à la deuxième position d'un angle de l'ordre de 10°.

La tige des vérins est mobile vers le haut ou vers le bas du dispositif de maintien.

Selon une variante, le crochet inférieur est monté articulé sur la partie extrême inférieure du bâti de support, et se déplace d'environ 90° entre la première et la deuxième position, le bras inférieur comprenant un coude introduit entre les demi carcasses à proximité de la tête.

Selon une autre réalisation, les moyens de maintien sont articulés suivant des axes respectifs verticaux qui s'étendent dans un plan pivot perpendiculaire au plan de symétrie.

Les bras de maintien sont actionnés par des vérins dont les axes sont horizontaux et inclinés de 40 à 50° par rapport au plan de symétrie.

Dans cette réalisation, le dispositif de maintien comprend un capot longitudinal de rehausse qui supporte une colonne formant bâti support pour les bras de maintien et vient en appui par une face contre la face dorsale des deux demi carcasses à proximité de la colonne vertébrale lorsque les deux demi carcasses sont rapprochées sous l'action des bras de maintien, la colonne supportant les axes verticaux de pivotement des bras de maintien.

La colonne s'étend parallèlement à la direction du capot, est de section générale sensiblement trapézoïdale et supporte une cloison de séparation verticale des demi carcasses rapprochées sous l'effet des bras de maintien en position de maintien.

Selon un autre mode de réalisation, les moyens de maintien comprennent un premier réceptacle pour une demi carcasse et un deuxième réceptacle pour l'autre demi carcasse, les réceptacles étant destinés au maintien des demi carcasses lors de l'arrachage des pannes, les réceptacles étant montés sur une colonne formant bâti support .

Selon une variante les réceptacles sont articulés entre eux, les réceptacles comprenant une première paroi à convexité tournée vers le plan de symétrie et une seconde paroi sensiblement plane articulée avec la première paroi, la seconde paroi du premier réceptacle étant articulée avec la première paroi du second réceptacle et formant avec elle une cloison de séparation entre les demi carcasses.

Dans cette variante le dispositif de maintien comprend des coulisseaux amenant les réceptacles de la positon d'attente à la position de maintien, les coulisseaux étant montés coulissant sur la colonne support.

En outre le dispositif de maintien comprend un sous ensemble de rehausse, comprenant des moyens de rehausse de type vérin, du bâti support des moyens de maintien, destinés à régler la hauteur du bâti support.

Selon un deuxième aspect, l'invention concerne une installation d'arrachage de pannes, comprenant au moins un dispositif d'arrachage des pannes, au moins un dispositif de maintien tel que décrit précédemment, le dispositif de maintien étant solidaire du bâti de support du dispositif d'arrachage des pannes par l'intermédiaire d'un bâti de raccord du type poutre longitudinale, ou séparé du bâti de support du dispositif d'arrachage

L'installation comprend des moyens de commande et l'asservissement du déplacement du dispositif de maintien et du dispositif d'arrachage, apte à permettre un déplacement simultané des moyens d'arrachage et des moyens de maintien.

L'installation comprend également des moyens de commande du déplacement des moyens de maintien et des moyens d'arrachage, tels que l'on commence l'arrachage des pannes une fois que les moyens de maintien s'appliquent contre la carcasse.

Le dispositif de maintien et le dispositif d'arrachage se positionnent de façon optimale pour l'arrachage, la position optimale étant déterminée en fonction de la longueur de l'animal.

Selon un troisième aspect, l'invention concerne un procédé d'arrachage d'un morceau d'un amas de graisse en forme de couche situé sous la peau du corps d'un animal abattu éviscéré, découpé en deux demi-carcasses reliées par la tête, plus spécialement la panne d'un porc, mettant en oeuvre une installation telle que décrite précédemment, dans lequel :
- on positionne l'animal découpé en deux demi-carcasses au regard, du côté ventral, d'un dispositif d'arrachage des pannes en position inactive, et du côté dorsal, d'un dispositif de maintien en position inactive d'attente ;
- on amène le dispositif d'arrachage des pannes à venir en position d'arrachage des pannes, et on amène le dispositif de maintien à passer dans une position active dans laquelle les moyens de maintien sont appliqués contre les deux demi-carcasses, de manière à rapprocher et maintenir les deux demi-carcasses, sensiblement dans leur position précédant la découpe de la carcasse en deux demi- carcasses, et suffisamment fortement pour permettre l'arrachage approprié des pannes ;
- on actionne les moyens d'arrachage en réalisant un déplacement relatif des moyens d'arrachage et des deux demi-carcasses, les moyens de maintien restant en position active de maintien;
- on retire, une fois l'arrachage terminé, en les ramenant en position inactive initiale, le dispositif d'arrachage et le dispositif de maintien ;
- on évacue les deux demi-carcasses dont les pannes ont été arrachées, pour pouvoir traiter la carcasse suivante.

Le retour à la position inactive et le désengagement des moyens de maintien est effectué simultanément au ou après le retrait du dispositif d'arrachage.

Selon une réalisation, on commande le début de l'arrachage en fonction de l'application du dispositif de maintien : l'arrachage commence lorsque les moyens de maintien sont appliqués de manière à maintenir en position l'animal suffisamment fermement pour l'arrachage à l'encontre de la poussée du dispositif d'arrachage, le dispositif de maintien et le dispositif d'arrachage étant amenés dans une position optimale pour l'arrachage qui est fonction de la longueur de la carcasse.

On maintient sensiblement stationnaire le corps de l'animal lors de l'arrachage, le procédé étant à poste fixe, ou au contraire on déplace le corps de l'animal, le procédé pouvant être alors à poste mobile.

Selon une réalisation on commande le déplacement du dispositif de maintien indépendamment de celui du dispositif d'arrachage, et l'actionnement des moyens de maintien indépendamment de l'actionnement des moyens d'arrachage.

D'autres objets et avantages de l'invention apparaîtront au cours de la description qui va être faite en référence aux figures annexées dans lesquelles :
- la figure 1 est une vue de côté d'une installation d'arrachage de pannes selon un premier mode de réalisation de l'invention, le dispositif de maintien étant dans la position de maintien;

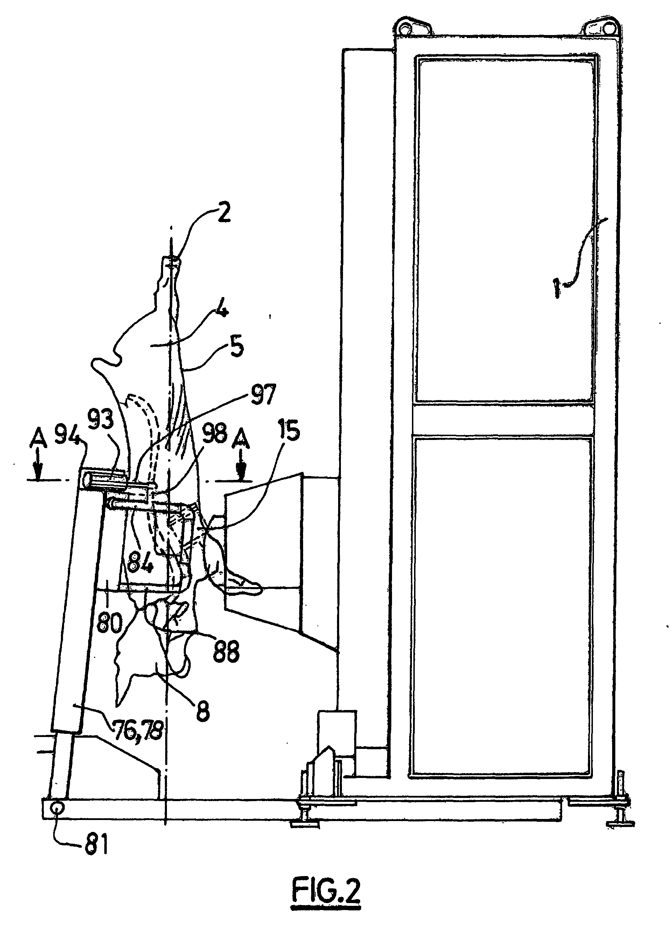

- la figure 2 est une vue analogue à la figure 1 d'un deuxième mode de réalisation de l'invention;

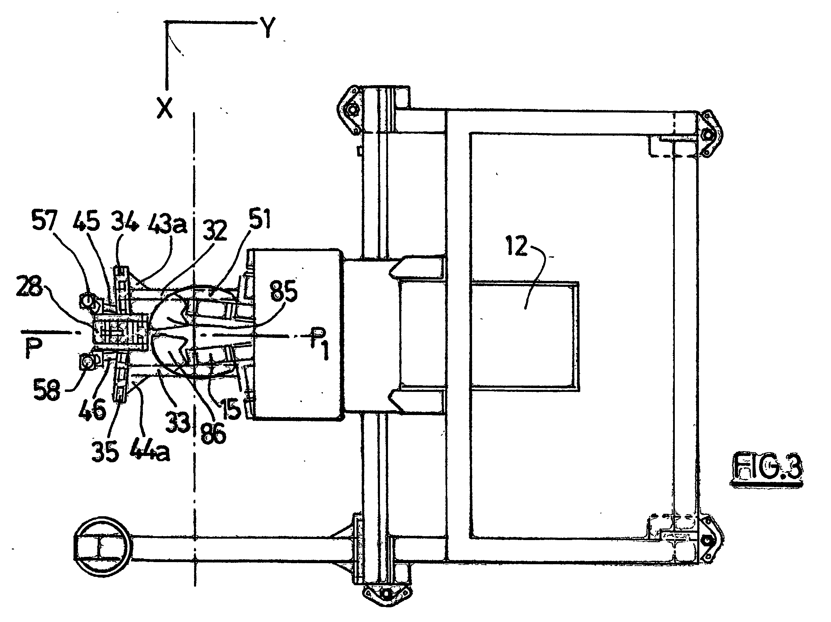

- la figure 3 est une vue de dessus de l'installation de la figure 1, dans la position de maintien ;

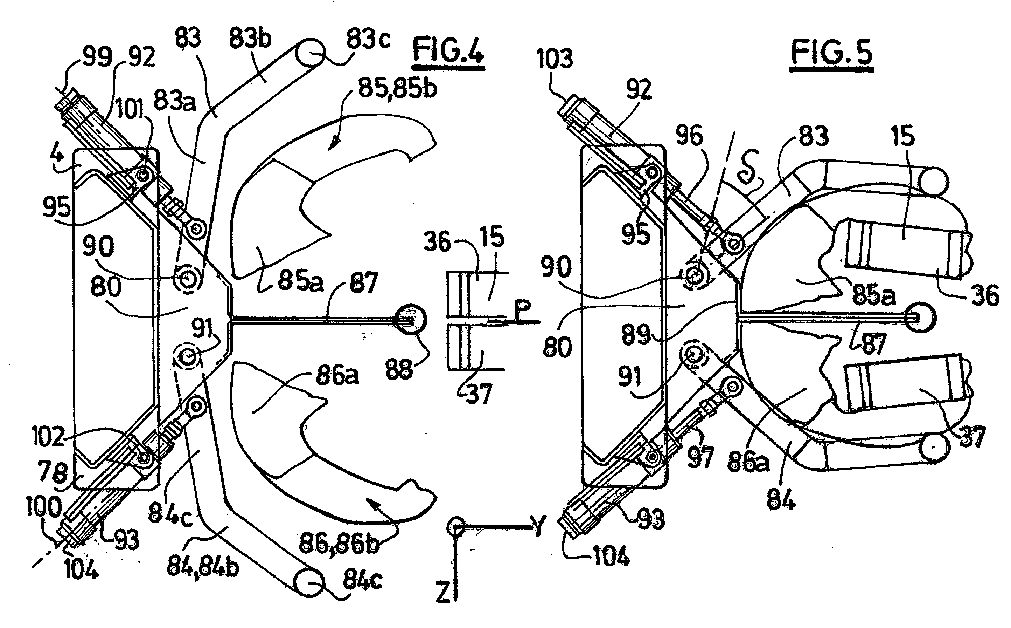

- la figure 4 est une vue partielle en coupe selon la ligne A-A de la figure 1 et en agrandissement dans la zone de maintien, dans la position inactive d'attente ;
- la figure 5 est une vue analogue à la figure 4, dans la position active de maintien des demi carcasses;
- la figure 6 est une vue de côté du dispositif de maintien des demi carcasses de la figure 1 dans la position inactive d'attente;
- la figure 7 est une analogue à la figure 6 dans la position active de maintien ;
- la figure 8 est une vue de face, du côté du dispositif d'arrachage des pannes, du dispositif de maintien de la figure 6 ;

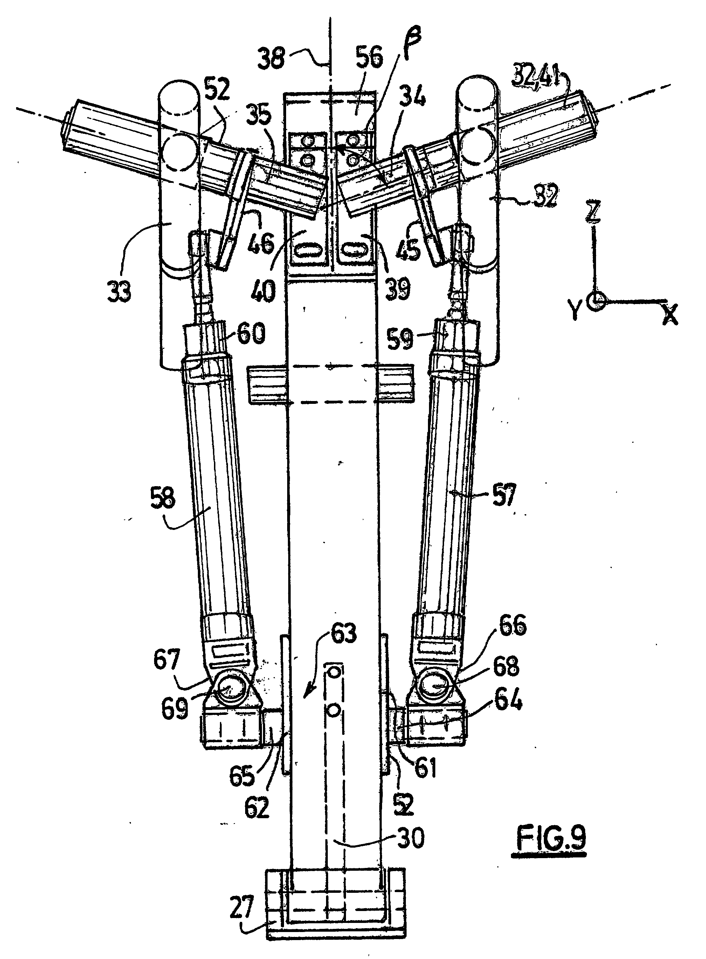

- la figure 9 une vue de face, du côté du dispositif d'arrachage des pannes, du dispositif de maintien de la figure 7 ;
- la figure 10 est une vue de côté du dispositif de maintien dans le mode de réalisation de la figure 2, en position inactive d'attente ;
- la figure 11 est une vue de côté du dispositif de maintien dans le mode de réalisation de la figure 2, en position active de maintien.
- La figure 12 est une vue partielle en coupe de dessus dans la zone de maintien selon un troisième mode de réalisation, en position d'attente
- La figure 13 est une vue analogue à la figure 12 en position de maintien
- La figure 14 est une vue analogue à la figure 13, en position d'arrachage, le dispositif d'arrachage étant introduit entre les demi carcasses

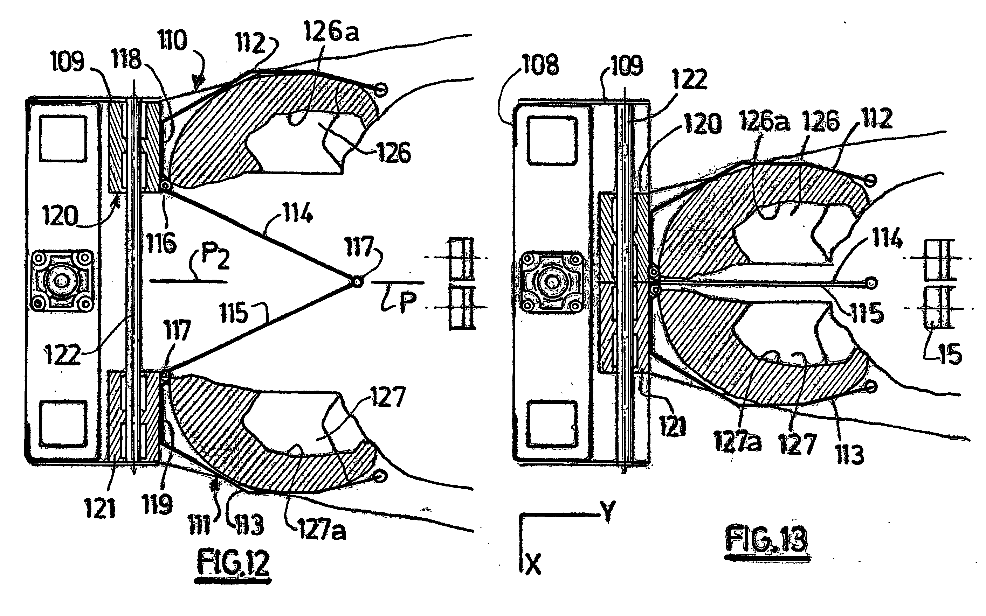

- La figure 15 est une vue en coupe selon la ligne B-B de la figure 14

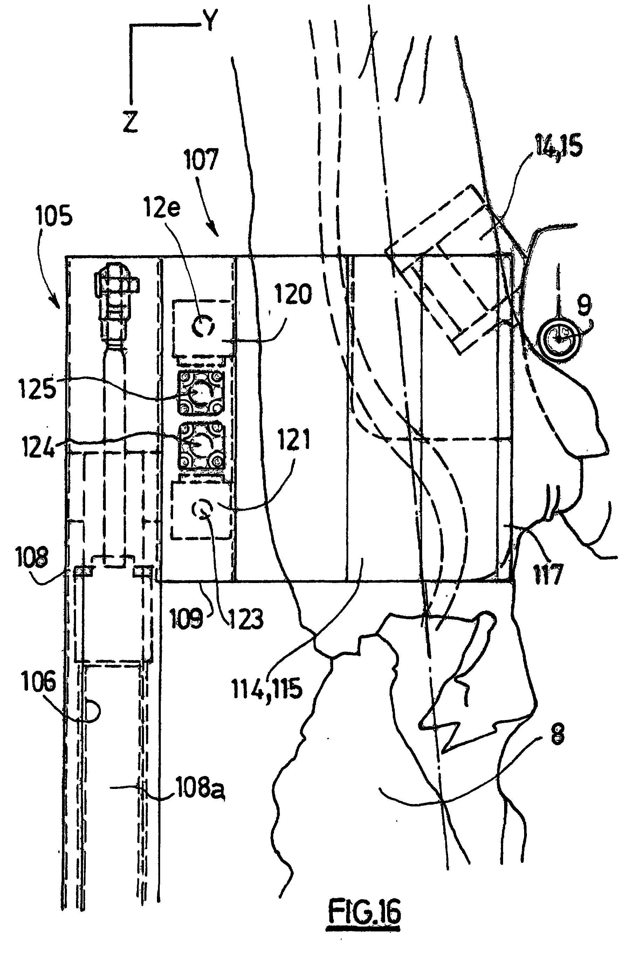

- La figure 16 est une vue de côté selon le troisième mode de réalisation

L'animal considéré est un porc. Il est ouvert verticalement du côté de la cage thoracique tournée vers le bâti 1, et présente ainsi une ouverture thoracico-abdominale 5. La panne 6 à arracher est alors en deux morceaux distincts, situés de part et d'autre de l'ouverture 5, vers l'intérieur de la cage thoracique. La panne 6 est attenante à la poitrine.

Le corps 4 de l'animal est de plus découpé, du côté de la colonne vertébrale opposé à l'ouverture 5. Il est suspendu à l'organe de suspension 3 par les pattes de derrière 7, la tête 8 étant dirigée vers le sol. La carcasse se divise donc en deux demi-carcasses sensiblement symétriques par rapport à un plan vertical P qui correspond au plan de découpe. Les deux demi-carcasses sont maintenues reliées entre elles au niveau de la tête, la découpe étant arrêtée avant la tête 8.

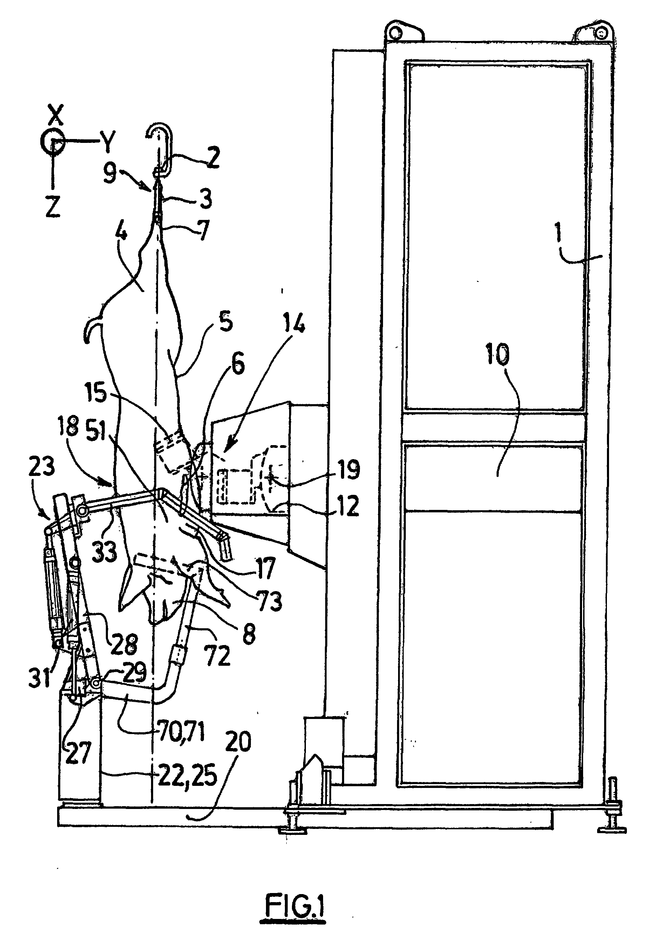

On décrit maintenant un premier mode de réalisation de l'invention. Une installation selon la réalisation de la figure 1 comprend un bâti 1 s'étendant verticalement, de position fixe. A côté et à proximité de la partie extrême supérieure du bâti 1 se trouve un convoyeur 2, mobile à défilement horizontal (perpendiculairement au plan de la figure 1), tel qu'un chariot mobile à galets roulant sur une piste de guidage. Cette piste de guidage définit une direction horizontale X laquelle permet de définir une autre direction horizontale perpendiculaire Y.

Les directions X et Y définissent avec la direction verticale Z le référentiel directionnel de l'installation et du procédé.

Au convoyeur 2 est associé un organe de suspension 3, disposé généralement verticalement, agencé pour supporter le corps 4 d'un animal abattu, ouvert et éviscéré.

Le convoyeur 2 est commandé de manière que le corps 4 de l'animal puisse être amené devant le bâti 1 pendant l'opération d'arrachage de pannes, et, enfin qu'il puisse être ensuite évacué.

Le convoyeur 2 et l'organe de suspension 3 forment des moyens support 9 du corps 4 de l'animal lors de son déplacement dans la direction X.

Lorsque le corps 4 de l'animal n'est pas entier mais découpé vers la colonne vertébrale, en l'absence de moyens de maintien appropriés, il n'y a pas une cohésion suffisante du corps 4 pour assurer un bon arrachage des pannes . Dans de tels cas, on souhaite prévoir un maintien d'ensemble du corps 4 dans un plan horizontal.

Dans la mesure où le corps 4 est suspendu verticalement, les deux morceaux de panne, en regard l'un de l'autre, s'étendent chacun en une sorte de bande présentant une certaine épaisseur, cette bande s'allongeant le long d'une direction verticale.

Le bâti 1 supporte un chariot 10 de monte et baisse, mobile verticalement par rapport au chassis 1, et qui supporte un chariot 12 s'étendant généralement horizontalement dans la direction Y, notamment vers l'ouverture thoracico-abdominale 5, le chariot 12 étant mobile selon la direction Y.

Le chariot 12 est monté sur le chariot de monte et baisse de manière à pouvoir se trouver et être maintenu dans deux positions extrêmes selon la direction Y, respectivement avancée et escamotée en arrière. La position avancée permet la mise en oeuvre du procédé d'arrachage lorsque les dispositifs de saisie sur lesquels on reviendra par la suite sont actifs. La position escamotée en arrière permet de dégager le passage pour le corps lors de son arrivée ou son évacuation.

Le second chariot 12 est porté et entraîné entre ses deux positions extrêmes par des moyens support et d'entraînement aptes à assurer le blocage en position voulue.

Plus généralement, le bâti 1, le chariot 12 et le chariot de monte et baisse sont réalisés afin que, dans le cadre de l'installation considérée, le chariot 12 puisse être déplacé tant verticalement vers le haut et le bas dans la direction Z, qu'horizontalement dans la direction Y.

Le chariot 12 supporte et est prolongé horizontalement dans la direction Y vers le convoyeur 2 et le corps 4 par un dispositif 14 de saisie des deux morceaux de panne 6 à arracher.

Le dispositif 14 comporte deux sous-ensembles de saisie 15, un sous-ensemble 15 pour chaque morceau de panne 6.

Le dispositif 14, respectivement les sous-ensembles de saisie 15, une fois déplacés de façon relative ainsi qu'il est décrit par la suite peuvent assurer non seulement la saisie de la panne, mais aussi son arrachage.

Selon une autre réalisation, l'installation est destinée à arracher une seule partie de panne au lieu de deux. Elle comporte alors un seul sous-ensemble de saisie 15.

Les deux sous-ensembles de saisie 15 sont montés chacun sur le chariot 12 de manière à pouvoir pivoter pour l'arrachage autour d'un axe 9.

Les deux sous-ensembles 15 sont disposés symétriquement ou sensiblement symétriquement par rapport au plan de symétrie P. Ils sont positionnés dos à dos. Les deux sous-ensembles 15 sont situés à proximité l'un de l'autre, dans un même plan horizontal et le long d'une direction générale parallèle à la direction X.

Les deux sous-ensembles 15 sont déplacés en synchronisme ou sensiblement synchronisme, pour rester symétriques ou sensiblement symétriques et éviter ainsi le déplacement ou le balancement intempestif du corps 4 par suite d'une dissymétrie des forces appliquées par les sous-ensembles de saisie 15.

Cette disposition constructive contribue, le corps étant découpé en deux demi-carcasses reliées par la tête au maintien d'ensemble du corps dans un plan horizontal. Toutefois, ce maintien n'est pas suffisant pour assurer un arrachage optimal des pannes.

On utilise ainsi un dispositif de maintien 18 décrit par la suite.

Les sous-ensembles de saisie 15 sont aptes à être déplacés de façon relative par rapport au corps 4. Ce dernier étant en l'occurrence fixe pendant l'arrachage de la panne 6, il convient de pouvoir déplacer les sous-ensembles de saisie 15 eux-mêmes, de façon appropriée à la géométrie du corps 4 considéré et à la cinématique qui en découle.

Chaque sous-ensemble de saisie 15 comprend par exemple des moyens mobiles de pincement aptes à assurer la saisie puis l'arrachage, tels que des mors 36.

Selon une réalisation, ils comprennent en outre des moyens d'aspiration combinés aux moyens de pincement.

On décrit maintenant brièvement le procédé de mise en oeuvre de l'installation comprenant le dispositif de saisie 14.

On part d'une situation où le corps 4 de l'animal abattu dont la panne en deux morceaux doit être arrachée, à été préalablement ouvert du côté de la cage thoracique pour présenter l'ouverture thoracico-abdominale puis découpé en deux demi-carcasses reliées par la tête 8.

Le corps 4 est suspendu, l'ouverture en regard du bâti 1 du côté du dispositif 14 et des deux sous-ensembles 15. A ce moment, le dispositif de saisie 14 est en position rétractée de manière à permettre l'amenée du corps 4, les deux sous-ensembles 15 étant rapprochés l'un de l'autre, ainsi qu'il est représenté en figure 1. Dans la réalisation considérée, le dispositif 14 est alors au niveau de la partie initiale 17, en l'occurrence inférieure, de la panne.

Cette partie 17, respectivement ce niveau, peut être détectée ou calculée grâce aux moyens prévus à cet effet. L'amenée au niveau convenable est assurée par le coulissement approprié du premier chariot 10 et les moyens d'entraînement associés.

L'étape suivante consiste à déplacer le dispositif 14, les sous-ensembles de saisie 15 restant en position rapprochée, de l'extérieur vers l'intérieur de la cage thoracique via l'ouverture. Lors de ce déplacement, le dispositif d'arrachage 14 reste sensiblement au même niveau horizontal.

Ce déplacement du dispositif 14 résulte du déplacement du second chariot 12.

Ce faisant, chaque sous-ensemble de saisie 15 tire sur la partie correspondante de panne, dans la partie initiale inférieure, ce qui la décolle du corps à cet endroit.

On décrit maintenant le dispositif de maintien 18.

Le dispositif de maintien 18 est monté sur un bâti 20 de raccord tel qu'une poutre horizontale fixée sur par exemple un montant vertical 21 du bâti 20. La longueur selon la direction Y de la poutre 20 est telle que le dispositif de maintien 18 est situé du côté dorsal des deux demi-carcasses.

Les dimensions de ce bâti 20 sont telles qu'il résiste aux contraintes mécaniques lors du maintien, et que les moyens de maintien qui seront décrits par la suite viennent se placer de façon adéquate par rapport à l'animal.

Selon une autre réalisation, on peut utiliser un dispositif de maintien 18 en regard et séparé du bâti d'arrachage 1. Un tel dispositif de maintien 18 séparé comprend alors des moyens de déplacement longitudinal selon la direction X, de manière à ce que le déplacement du bâti d'arrachage soit en phase avec le déplacement du bâti de maintien séparé.

Pour le mode de réalisation représenté figure 1, le dispositif de maintien 18 comprend lorsque le poste d'arrachage est mobile, un sous-ensemble de rehausse 22 et un sous-ensemble de maintien 23 fixé sur le sous-ensemble de rehausse 22 à l'aide de moyens de fixation 24.

Le sous-ensemble de rehausse 22 comporte un capot mobile verticalement 25 à l'aide d'un vérin 26, de manière à obtenir un déplacement vertical réglable du sous-ensemble de maintien 23 par rapport au capot 25 du bâti 20 et un ajustage de la hauteur des moyens de maintien qui seront décrits par la suite, notamment en fonction de la taille des animaux. L'actionnement du vérin 26 pour amener le sous-ensemble de maintien 23 est commandé à l'aide de moyens prévus à cet effet, typiquement après détection de la position de l'animal 4 par rapport au sous-ensemble de maintien 23.

Dans la réalisation représentée le sous-ensemble de rehausse 22 est fixe selon la direction Y. On peut envisager selon d'autres réalisations, un déplacement selon cette direction Y de l'ensemble de rehausse 22, et donc de l'ensemble de maintien 23. De même, au lieu d'une poutre 20 fixe verticalement, on peut aussi prévoir une poutre 20 mobile verticalement par rapport au bâti 1. La poutre 20 est horizontale, on peut aussi la prévoir inclinée.

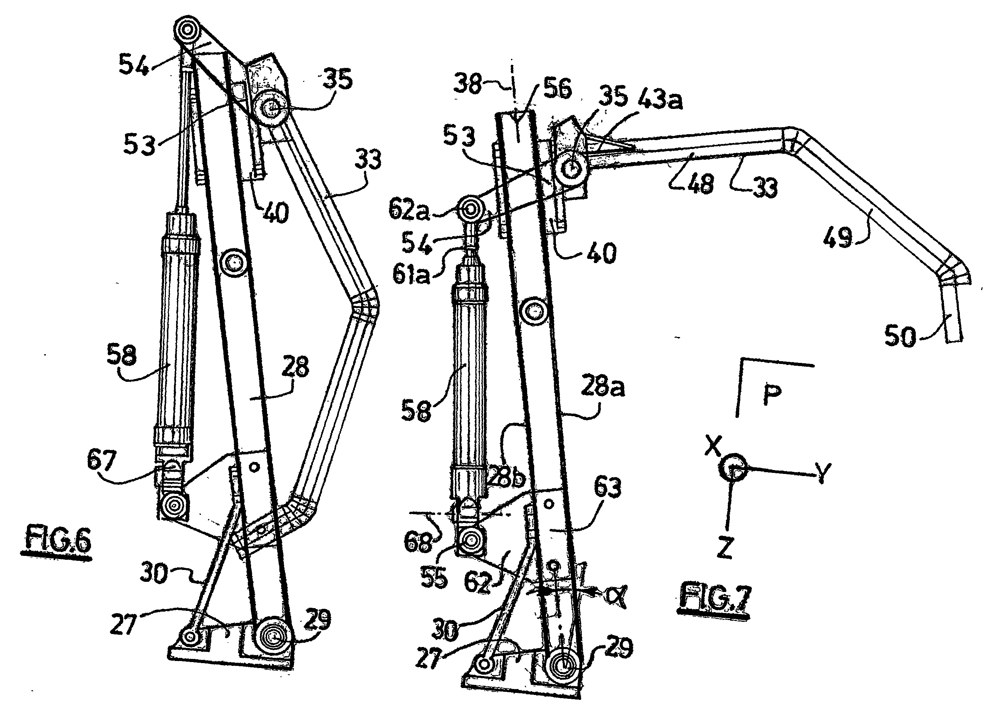

L'ensemble de maintien 23 comporte un socle de montage 27 fixé sur l'ensemble de rehausse 22. Le socle 27 supporte une poutre 28 châssis des moyens de maintien qui vont être décrits plus loin. Cette poutre 28 s'étend selon une direction D faisant dans la réalisation représentée un angle α (figures 6 et 7) de l'ordre de 10 degrés, par rapport à la direction verticale Z. cette poutre est montée sur un axe 29 longitudinal du socle 27. Selon une réalisation, l'angle α est fixe, la poutre 28 étant maintenue par un contrefort 30. Selon une autre réalisation, l'angle α varie typiquement entre 10 et 30 degrés à l'aide d'un vérin 31 venant en contre appui contre le châssis 28 pour en régler l'inclinaison. Selon certaines réalisations, l'angle α est nul.

L'ensemble de maintien 23 est symétrique par rapport à un plan P1, qui coïncide avec le plan P vertical de symétrie de la carcasse, lorsque l'ensemble de maintien 23 est en position appropriée pour que les moyens de maintien puissent être appliqués contre les deux demi-carcasses.

Les moyens de maintien supportés par la poutre 28 se présentent sous la forme de deux bras articulés 32, 33, de maintien des deux demi-carcasses. Les bras 32, 33 sont fixés sur deux axes respectivement 34, 35. Les axes 34,35 sont inclinés chacun du même angle β, de l'ordre de 30 degrés, par rapport à l'axe longitudinal 38 de la poutre 28.

En position de maintien, le plan de symétrie P de l'animal en deux demi-carcasses coincide avec le plan vertical P1 qui comprend l'axe 38. Les axes 34, 35 sont montés sur la poutre 28 par l'intermédiaire de plaques pivot 39, 40 respectivement.

Les bras 32, 33 comprennent chacun un corps tubulaire, respectivement 43, 44 enmanché sur les axes respectivement 34, 35. Les corps tubulaires 43,44 sont montés pivotantes par rapport aux axes 34,35 respectivement, sous l'effet de leviers respectivement 45, 46 reliés au corps tubulaires 43,44 par des tiges 41,42 respectivement.

Les axes 34,35 sont placés du côté de la face 28a tournée vers l'animal de la poutre 28. Dans la réalisation représentée, chaque bras 32, 33 comprend, en s'éloignant des axes 34,35 de la poutre 28, une première portion 48, formant un coude de l'ordre de 120° avec une deuxième portion 49 elle-même formant un coude de l'ordre de 120° avec une troisième portion d'extrémité 50. En position active de maintien, les portions 48, 49, 50 viennent s'appliquer contre les flancs latéraux 51 de l'animal, de manière à maintenir les deux demi-carcasses lors de l'arrachage des pannes.

Les bras 33, 34, en position active de maintien, du fait de l'inclinaison des axes 34,35 par rapport à la poutre 28, et de la forme des bras, se calent de façon appropriée contre les flancs 51. Les deux demi-carcasses 85, 86 se rapprochant vers le plan de symétrie P de la carcasse.

On pourrait envisager des axes 34,35 parallèles à l'axe X perpendiculaires à l'axe longitudinal 38 de la poutre. Les bras 32, 33, par pivotement autour de la ces axes 34,35 risqueraient de venir en butée contre la face dorsale de l'animal, sans réussir à le maintenir latéralement. De même, on pourrait envisager des bras articulés 32, 33 pivotant autour d'un axe s'étendant sur la direction Z. Dans ce cas, les bras se rabattant par pivotement latéralement occuperaient un encombrement latéral selon la direction X nettement supérieur.

Les bras 32, 33 viennent s'appliquer latéralement au niveau d'une zone de maintien sensiblement au niveau du début de l'échine pour la première portion 48, tandis que les deuxième et troisième portions 49, 50 orientées vers la tête, stabilisent les flancs 51 du côté ventral.

Dans la position inactive d'attente, les bras 32, 33 ne maintiennent pas l'animal. Ils sont orientés vers le bas de l'ensemble de maintien 23.

Les bras 32, 33 comprennent en outre chacun une plaque, par exemple triangulaire 43a, 44a respectivement entre les premières portions 48 et les corps tubulaires 43, 44.

Les plaques pivot 39, 40 sont formées par une plaque entretoise, montée à l'aide d'un système vis-écrou-rondelle 52 sur la poutre 28.

Les leviers 45, 46 sont par exemple des plaques comportant une première partie extrême 53 présentant un orifice de réception respectivement des axes 34, 35, et une deuxième partie extrême 54 de raccordement de ces leviers 45, 46 à des moyens d'actionnement 55 de ces leviers 45, 46.

Dans cette réalisation, les premières parties extrêmes 53 des leviers 45,46 sont situées du côté de la face 28a, les deuxièmes parties extrêmes sont situées du côté de la face 28b opposée. Dans les réalisations représentées, les moyens d'actionnement 55, lors du passage de la position inactive d'attente à la position active de maintien, amènent les deuxièmes parties extrêmes 54, d'une position haute légèrement au dessus de l'extrémité 56 de la poutre 28, à une position basse. Ce basculement entraîne la montée des bras 32, 33 par un effet de levier.

Les moyens d'actionnement 55 dans les réalisations représentées comprennent pour chaque bras 32, 33 un vérin respectivement 57, 58.

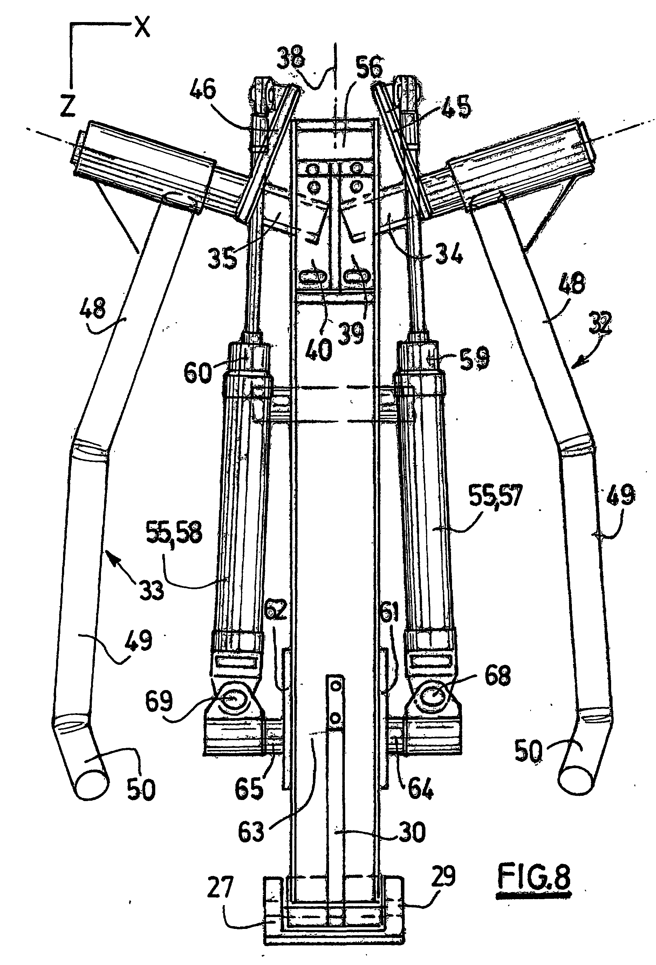

Dans la réalisation de la figure 8, les tiges 59, 60 sont reliées aux deuxièmes parties extrêmes 54 des leviers 45, 46, par exemple à l'aide d'un système chape à rotule 61a et vis 62a.

Les vérins 57,58 sont situés du côté de la face 28b. En position courte des vérins 57, 58, les bras 32, 33 sont en position active de maintien. En position longue des vérins 57, 58 les bras 32, 33 sont en position inactive d'attente. Le passage à la position courte permet la montée des bras 32,33.

Les vérins 57, 58 sont montés à l'aide de cardans 64,65 sur des plaques 61, 62 fixées sur la poutre 28, par exemple à proximité de la zone d'appui 63 du contrefort 30.

Les extrémités inférieures 66, 67 des vérins 57, 58 sont mobiles par rapport à un axe de pivot respectivement 68, 69 horizontal perpendiculaire au plan vertical P1 de symétrie. Lors du passage de la position inactive, les bras 32, 33 étant inactifs tournés vers le bas, à la position active de maintien, les vérins 57, 58 passent de la position longue à la position courte, et s'écartent latéralement, en pivotant autour des axes 68, 69, de l'axe 38 de la poutre 28.

Lors du passage de la position courte à la position longue des vérins 57, 58, les parties extrêmes 59,60 des vérins 57,58, montées sur les parties extrêmes 54 des leviers 45, 46, se déplacent angulairement vers le haut, les axes des vérins se rapprochant selon la direction Y de l'axe de la poutre 28.

Les leviers 45, 46 s'étendent chacun dans un plan perpendiculaire respectivement aux axes 36, 37. Grâce à la structure et au fonctionnement des bras de maintien 32, 33 décrits, les faces latérales de l'animal de sont pas endommagées et les bras de maintien viennent s'appliquer contre la carcasse de manière à la maintenir malgré l'action du dispositif d'arrachage 14 des pannes 6.

Typiquement après la découpe de la carcasse en deux demi-carcasses, les deux demi-carcasses sont espacées, formant un V, reliées au niveau de la tête. Les bras de maintien ont ainsi une fonction de pincement pour rapprocher les deux demi-carcasses jusqu'à une position sensiblement verticale nécessaire pour l'arrachage.

Selon une variante du premier mode de réalisation, les vérins 57, 58 sont orientés dans le sens inverse, la tige de vérin sortant vers le bas.

Selon une réalisation représentée, en position active de maintien, les bras de maintien 32,33 sont à une hauteur légèrement inférieure à celle des moyens de préhension des pannes des sous-ensembles d'arrachage 15, pour éviter d'endommager la viande.

Par ailleurs, l'ensemble de maintien 23 présente pour chaque demi-carcasse, tel que représenté sur la figure, un autre moyen de retenue 70 en forme générale de crochet ou d'arceau. Cet arceau 70 comprend une première partie coudée 71, une deuxième partie rectiligne 72, une troisième partie rectiligne 73, prolongeant et perpendiculaire à la partie 72. Cet arceau 70 est apte à pivoter autour de l'axe horizontal 29. En position inactive d'attente, la partie 72 est sensiblement horizontale et la partie 73 sensiblement verticale. Par passage à la position active de maintien, les portions 72 viennent se placer entre les demi carcasses dans la zone du cou 74, de manière à maintenir la tête de l'animal. D'autres variantes sont possibles pour introduire à proximité du cou une structure de séparation des demi carcasses.

Les deux demi-carcasses sont maintenues par le moyen de suspension 3 en position supérieure, par les bras de maintien 32, 33 vers la zone médiane de l'animal, et par l'arceau 70 à proximité de la tête. On évite ainsi des mouvements incontrôlés des demi carcasses.

On décrit maintenant un deuxième mode de réalisation de l'invention, l'ensemble de maintien 23 étant particulièrement destiné au maintien des demi carcasses dans le cas de têtes déjointées.

Le bâti de maintien 20 supporte un dispositif de maintien 75 qui comprend un sous-ensemble de rehausse 76 et un sous-ensemble de maintien 77.

Le sous-ensemble de rehausse 76 comporte un capot mobile verticalement 78 à l'aide d'un vérin 79, de manière à obtenir un déplacement vertical réglable du sous-ensemble de maintien 77 par rapport à la poutre du bâti 20, et un ajustage de la hauteur des moyens de maintien qui seront décris par la suite. Le vérin représenté est pneumatique, on peut prévoir par exemple un vérin de type électrique, une motorisation avec codeur, une vis à bille.

L'actionnement du vérin 79 pour amener le sous-ensemble de maintien 77 est commandé à l'aide de moyens prévus à cet effet. Comme pour le premier mode de réalisation décrit, le sous-ensemble de rehausse 76 est fixe selon la direction Y, on peut envisager d'autres réalisations.

Le sous-ensemble de maintien 77 comprend une colonne de support de section rectangulaire sur la réalisation représentée. Cette colonne support 80 est fixée sur le capot mobile 78.

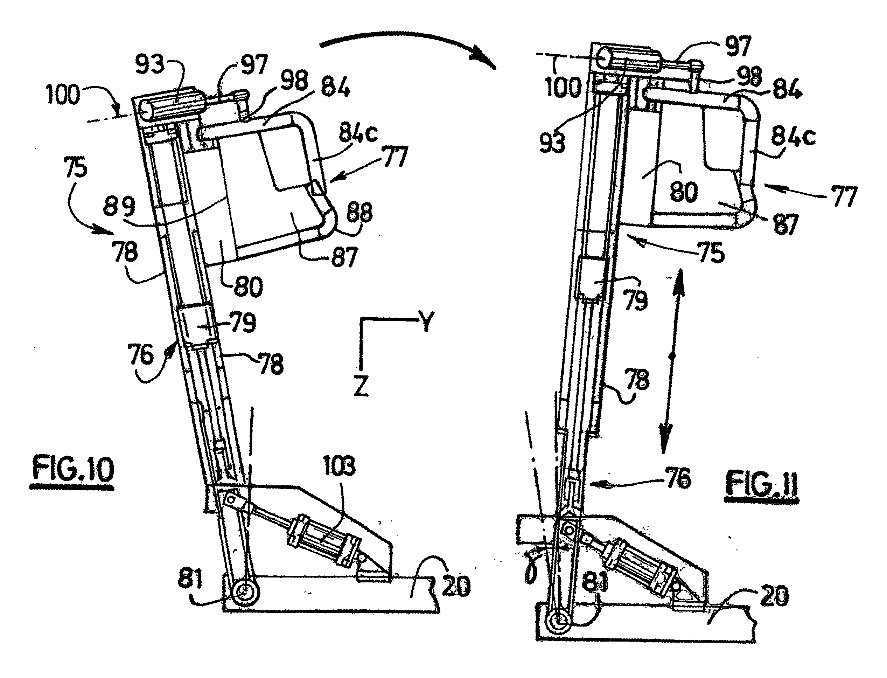

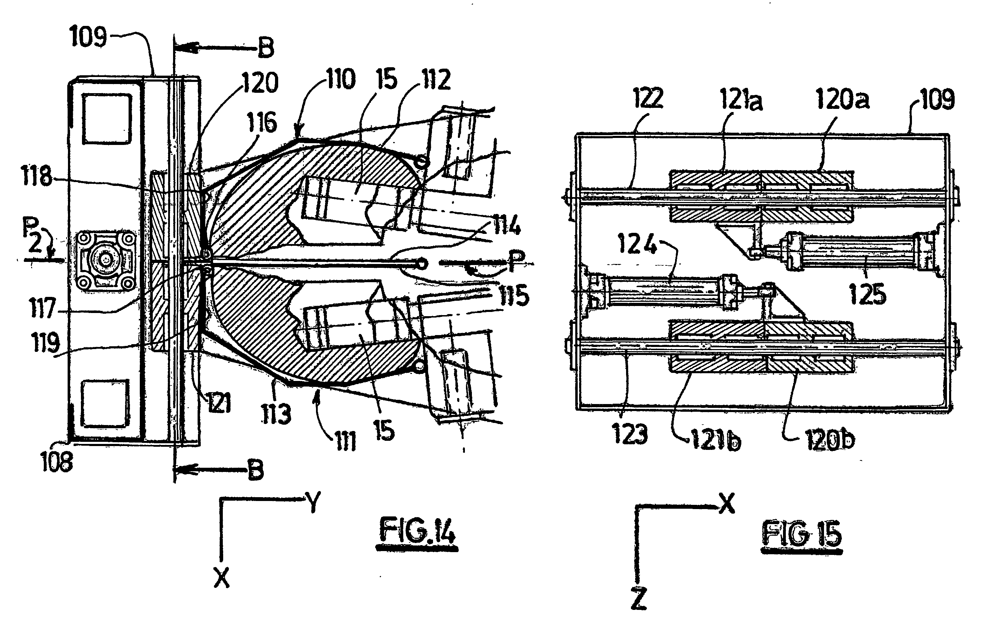

Le capot 78 est mobile également selon la direction Y en pivotant autour d'un axe horizontal 81. Le pivotement se fait, entre la position inactive d'attente (figure 10), et la position active de maintien (figure 11), selon un angle de l'ordre de 30°.

La colonne support 80 supporte deux bras de maintien 83,84 destinés au maintien, dans la position de maintien, des demi carcasses 85,86.

Chaque bras 83,84 comprend, en s'éloignant du capot 78, un premier segment 83a,84a, un deuxième segment 83b,84b, et un troisième segment 83c,84c.

Les segments 83a,83b,84a,84b sont sensiblement perpendiculaires au capot 78, les segments 83c,84c sont sensiblement parallèles au capot 78, les segments 83a,83b font entre eux un angle de l'ordre de 120°, de même que les segments 84a,84b.

En position active de maintien, les segments 83a,84a s'appliquent essentiellement contre les zones dorsales 85a,86a, et les segments 83b,84b s'appliquent contre les flancs latéraux 85b,86b.

Cette forme spécifique décrite peut être différente dans d'autres réalisations, l'essentiel étant l'application de bras de maintien enserrant de part et d'autre les demi carcasses pour les rapprocher vers le plan de symétrie. Les demi carcasses sont ainsi maintenues pour éviter un déplacement non contrôlé latéral selon la direction de défilement. Dans la réalisation représentée, les segments 83c,84c améliorent le maintien dans la zone d'arrachage des pannes par le dispositif d'arrachage.

En outre, le dispositif de maintien 75 comprend une cloison 87 fixée sur un crochet inférieur 88, fixé sur le bâti en forme de colonne ou de coffrage 80. La cloison 87 évite un rapprochement excessif voir un chevauchement des demi carcasses 85,86. Les parties 85a,86a viennent en appui contre la face 89 de la colonne support 80. Le maintien est ainsi assuré par la combinaison de l'action des bras de maintien 83,84, de la colonne 80, de la cloison 87.

La colonne 80 supporte les axes 90, 91 verticaux d'articulation des bras 83,84.

Entre la position d'attente et la position active de maintien, les bras 83,84 se déplacent d'un angle de l'ordre de 30°, sous l'action de vérins 92,93.

Les vérins 92,93 sont fixés sur la partie extrême supérieure 94 du sous-ensemble de maintien 77, à l'aide de pièces de fixation 95.

Les tiges 96,97 des vérins 92,93 sont reliés aux bras supérieurs 83,84 au niveau des segments 83a,84a, par des raccords 98 tubulaires.

Les axes 99,100 des vérins 92,93, s'étendent sensiblement horizontalement en faisant un angle de l'ordre de 45° par rapport au plan de symétrie P. Les vérins 92,93 sont montés pivotants par rapport aux parties de fixation 95 autour d'axes de pivotement verticaux respectivement 101,102 pour les bras 83,84.

Lors du passage en position active, les axes 99,100 longitudinaux se déplacent légèrement par rapport à la position initiale, de même que les extrémités libres 103,104 des vérins 92,93.

Le dispositif de maintien 75 décrit est particulièrement efficace pour le maintien des demi carcasses, têtes déjointées.

Le sous-ensemble de rehausse 76 permet le déplacement du sous-ensemble de maintien 77, en particulier des bras de maintien 83,84 le long des demi carcasses.

Le déplacement vers le haut ou vers le bas du sous-ensemble de maintien 77 se fait, selon une réalisation, avant le déplacement vertical du dispositif d'arrachage des pannes. Le sous-ensemble de rehausse 76 permet le positionnement du sous-ensemble de maintien 77 jusqu'à la position appropriée pour l'arrachage des pannes. Cette position appropriée peut être calculée pour chaque carcasse à partir d'une loi statistique, ou déterminée à l'avance.

Selon une autre réalisation, le sous-ensemble de maintien 77 se déplace en même temps que le dispositif d'arrachage des pannes. Ce déplacement simultané est effectué à l'aide de moyens de commande appropriés.

Le dispositif de maintien 75 est apte en tout cas à commander l'application des bras de maintien 83,84 et de la cloison 87 avant l'arrachage à proprement parler des pannes.

En outre, dans la réalisation représentée, le basculement du dispositif de maintien 75 évite une gêne par la tête de son positionnement approprié.

On décrit maintenant un troisième mode de réalisation de l'invention.

L'ensemble de maintien 23 est comme pour le deuxième mode de réalisation, particulièrement destiné au maintien des demi carcasses 85, 86 dans le cas de têtes déjointées.

La bâti de maintien 20 supporte un dispositif de maintien 105 qui comprend un sous ensemble de rehausse 106 et un sous ensemble de maintien 107.

Le sous ensemble de rehausse 106 comporte comme dans le deuxième mode de réalisation un capot 108 mobile verticalement à l'aide d'un vérin 108a de manière à obtenir un déplacement vertical réglable du sous ensemble de maintien 107 par rapport à la poutre du bâti 20.

Le sous ensemble de maintien 107 comprend une colonne 109 de section rectangulaire sur la réalisation représentée symétrique par rapport à un plan P2 de symétrie.

Cette colonne 109 doit supporter des moyens de maintien qui vont être décrits, et fixés sur le capot mobile 108.

La colonne 109 supporte deux réceptacles 110, 111.

Les réceptacles 110, 111 comprennent une première paroi respectivement 112, 113 à convexité tournée vers la face externe de chaque demi carcasse 85, 86, et une deuxième paroi sensiblement plane respectivement 114, 115.

Les parois 112, 114 sont articulées autour d'un axe 116, les parois 113, 115 sont articulées autour d'un axe 117.

Les axes 116, 117 sont coplanaires et parallèles à l'axe du capot 108.

Les parois 114, 115 forment un V articulé autour d'une charnière 117, de sorte qu'ensemble les deux réceptacles 110, 111 ont en coupe sensiblement la forme d'un W.

Les figures 12 et 13 illustrent le positionnement des réceptacles de maintien 110, 111 respectivement dans la position inactive d'attente, et dans la position active de maintien.

Dans la position d'attente, les demi carcasses 85,86 sont écartées, les parois 114,115 forment un V.

En position active de maintien, les réceptacles 110, 111 se rapprochent, les parois 114, 115 centrales coopérant, étant appliquées l'une contre l'autre.

Les réceptacles 110, 111 comprennent chacun une partie respectivement 118, 119 solidaire d'un coulisseau respectivement 120, 121 monté coulissant perpendiculairement au plan de symétrie P2 de la colonne 109.

Plus précisément, les coulisseaux 120, 121 coulissent par rapport à deux tiges 122, 123 horizontales coplanaires espacés verticalement.

Le coulisseau 120 comprend deux parties 120a et 120b dont le déplacement est commandé par un vérin 124.

Le coulisseau 121 comprend deux parties 121a et 121b dont le déplacement est commandé par un vérin 125.

Les vérins 124 et 125 sont montés têtes bêche afin de limiter l'encombrement du dispositif de maintien dans la réalisation représentée.

Le positionnement du dispositif de maintien 105 est tel qu'en position de maintien, le plan de symétrie P2 de ce dispositif coïncide avec le plan de symétrie P des demi carcasses 85, 86 rapprochées par le déplacement vers le plan P2 des deux coulisseaux 120, 121.

En position de maintien, les faces en regard des coulisseaux 120, 121 sont sensiblement tangentes.

La figure 14 illustre plus précisément le positionnement des mors des sous ensembles d'arrachage 15 des pannes.

Les demi carcasses 85, 86 définissent une cavité respectivement 126, 127 pour le positionnement des mors 36, les réceptacles 110, 111 étant en position de maintien. Les mors 36 sont introduits dans les cavités 126, 127

Par pivotement, les mors 36 viennent s'appliquer sur la face interne 126a, 127a du côté ventral de chaque demi carcasse.

Ainsi, les réceptacles 110,111, notamment les parois 112, 113 facilitent le positionnement des deux demi carcasses dans la position appropriée pour l'arrachage et permettent le maintien lors du fonctionnement des sous ensembles d'arrachage 115 lors de l'arrachage.

Le maintien est ainsi particulièrement efficace surtout dans le cas de carcasses à têtes déjointées.

L'action du dispositif d'arrachage 14 décrit selon le premier, le deuxième ou le troisième mode de réalisation est particulièrement efficace. Le dispositif d'arrachage 14 peut d'ailleurs être moins complexe que celui décrit précédemment, lorsque les installations disposent d'un tel dispositif de maintien 18. On peut ainsi procéder à l'arrachage des pannes par pincement et non par l'action combinée d'un pincement et d'une aspiration par exemple.

Les ensembles de rehausse 22 et de maintien 23 sont munis de moyens d'entraînement non représentés sur les figures permettant les mouvements des moyens de maintien décrits.

On a décrit des réalisations dans lesquelles le bâti 20 du dispositif de maintien 18 et le bâti 1 du dispositif d'arrachage sont solidaires. Dans d'autres réalisations plus complexes, on peut vouloir contrôler indépendamment le fonctionnement du dispositif de maintien 18, notamment le mouvement selon la direction X de ce dispositif de maintien, et le déplacement notamment selon la direction X, du dispositif d'arrachage.

Dans des réalisations plus complexes, pour un arrachage à poste mobile la carcasse se déplaçant selon la direction X lors de l'arrachage, on peut souhaiter un actionnement sensiblement simultané des bras de maintien et de la progression du chariot portant le dispositif d'arrachage des pannes. Ceci notamment dans des cadences d'arrachage particulièrement élevées.

Par ailleurs on a décrit un dispositif de maintien particulièrement destiné au maintien de carcasses découpées en deux demi-carcasses maintenues solidaires notamment par la tête. Un tel dispositif de maintien pourrait être utilisable pour des carcasses complètement découpées sur toute la longueur, la carcasse étant séparée en deux demi-carcasses. Toutefois, la précision de l'arrachage des pannes serait moindre, à moins d'utiliser un dispositif d'arrachage de panne qui soit en lui-même particulièrement performant pour contribuer à l'action de maintien des demi-carcasses séparées, complémentairement à l'action du dispositif de maintien.

Inversement, le dispositif de maintien peut être utilisé pour des carcasses non séparées en deux demi-carcasses, mais simplement avec une ouverture thoracique abdominale, par exemple lorsque une même installation alterne l'arrachage de carcasses séparées ou non séparées en demi carcasses.

## Revendications

1. Dispositif de maintien (18) lors de l'arrachage d'amas de graisse en forme de couche située sous la peau du corps d'un animal abattu, ouvert et éviscéré, plus spécialement les pannes (6) d'un porc, le dispositif étant destiné à faire partie d'une installation d'arrachage des pannes, dans laquelle l'animal est découpé en deux demi-carcasses maintenues solidaires par au moins une partie du corps notamment au niveau de la tête (8), l'animal étant suspendu par les pattes arrières, la tête en bas, **caractérisé en ce que** ledit dispositif (18) comprend du côté dorsal de la carcasse (4), un bâti de support (28, 80) portant de part et d'autre de la carcasse des moyens de maintien (32, 33, 83, 84) des deux demi-carcasses espacés entre eux et fixés de façon articulée au bâti, mobiles entre une première position dite d'attente dans laquelle les moyens de maintien sont libres par rapport à la carcasse, et une deuxième position dite de maintien dans laquelle ces moyens de maintien sont en appui de part et d'autre de la carcasse, et sont sensiblement symétriques par rapport au plan de symétrie de la carcasse.

2. Dispositif selon la revendication 1, **caractérisé en ce que** les moyens de maintien comprennent deux bras arqués (32, 33) dont la convexité est tournée vers le plan de symétrie, de manière à s'appliquer contre la face externe des flancs latéraux des demi-carcasses dans la position de maintien.

3. Dispositif selon la revendication 2, **caractérisé en ce que** les moyens de maintien comprennent en outre des moyens de retenue (70) de la tête en position de maintien, du type bras formant crochets introduits entre les demi-carcasses, ou plaques de maintien appliquées de part et d'autre des demi-carcasses.

4. Dispositif selon l'une quelconque des revendications 1 à 3, **caractérisé en ce que** les moyens de maintien (32, 33) sont articulés suivant des axes respectifs qui s'étendent dans un plan de support parallèle ou incliné par rapport au plan perpendiculaire au plan de symétrie de la carcasse, et qui sont inclinés dans ce plan de support d'un angle compris entre 20 et 40° par rapport à la perpendiculaire au plan de symétrie.

5. Dispositif selon l'une quelconque des revendications 1 à 4, **caractérisé en ce que** le bâti de support (28) comprend une poutre longitudinale s'étendant selon un axe de bâti (38) inclus dans le plan de symétrie et parallèle au plan de support, l'axe (38) de bâti étant fixe ou d'inclinaison réglable de 10° à 30° par rapport au plan vertical perpendiculaire au plan de symétrie.

6. Dispositif selon l'une quelconque des revendications 1 à 5, **caractérisé en ce que** les axes (36, 37) des bras (32, 33) sont situés du côté (28a) du bâti de support (28) situé en regard de la face dorsale de la carcasse.

7. Dispositif selon l'une quelconque des revendications 1 à 6, **caractérisé en ce qu'**il comprend des moyens formant levier (45, 46) destinés au pivotement des bras de maintien (32, 33) par rapport aux axes d'articulation (35, 36) de ces bras.

8. Dispositif selon la revendication 7, **caractérisé en ce que** les moyens formant levier (45, 46) sont actionnés par des vérins (57, 58) à simple ou double effet, montés sur le bâti de support (28), aptes à amener les bras par effet de levier de la première à la deuxième position.

9. Dispositif selon la revendication 8, **caractérisé en ce que** les vérins (45, 46) sont montés sur des axes pivots (68, 69) parallèles au plan de symétrie, les vérins pivotant angulairement autour de ces axes lors du passage de la première à la deuxième position d'un angle de l'ordre de 5 à 20°.

10. Dispositif selon la revendication 9, **caractérisé en ce que** les tiges (59, 60) des vérins sont mobiles vers le haut ou vers le bas du dispositif de maintien.

11. Dispositif l'une quelconque des revendications 3 à 10, **caractérisé en ce que** le crochet inférieur (70) est monté articulé sur la partie extrême inférieure du bâti de support, et se déplace d'environ 90° entre la première et la deuxième position, le bras inférieur comprenant un coude maintenant la tête de l'animal.

12. Dispositif la revendication 2, **caractérisé en ce que** ce que les moyens de maintien (83,84) sont articulés suivant des axes respectifs verticaux (90,91) qui s'étendent dans un plan pivot perpendiculaire au plan de symétrie.

13. Dispositif selon la revendication 12 **caractérisé en ce que** les bras de maintien sont actionnés par des vérins (92,93) dont les axes (99,100) sont horizontaux et inclinés de 40 à 50° par rapport au plan de symétrie.

14. Dispositif selon l'une quelconque des revendications 12 ou 13, **caractérisé en ce que** le dispositif de maintien (75) comprend un capot longitudinal (78) de rehausse qui supporte une colonne (80) formant bâti support pour les bras de maintien (83,84) et vient en appui par une face (89) contre la face dorsale des deux demi carcasses (85a,86a) à proximité de la colonne vertébrale lorsque les deux demi carcasses sont rapprochées sous l'action des bras de maintien, la colonne supportant les axes verticaux (90,91) de pivotement des bras de maintien.

15. Dispositif selon la revendication 14 **caractérisé en ce que** la colonne (80) s'étend parallèlement à la direction du capot (78), est de section générale sensiblement trapézoïdale et supporte une cloison (87) de séparation verticale des demi carcasses (85,86) rapprochées sous l'effet des bras de maintien en position de maintien.

16. Dispositif selon la revendication 2 **caractérisé en ce que** les moyens de maintien comprennent un premier réceptacle (110) pour une demi carcasse (85) et un deuxième réceptacle pour l'autre demi carcasse (86), les réceptacles (110, 111) étant destinés au maintien des demi carcasses lors de l'arrachage des pannes, les réceptacles étant montés sur une colonne (109) formant bâti support .

17. Dispositif selon la revendication 16 **caractérisé en ce que** les réceptacles sont articulés entre eux, les réceptacles comprenant une première paroi (112,113) à convexité tournée vers le plan de symétrie et une seconde paroi sensiblement plane (114,115) articulée avec la première paroi (112,113), la seconde paroi (114) du premier réceptacle (110) étant articulée avec la première paroi (113) du second réceptacle (111) et formant avec elle une cloison de séparation entre les demi carcasses.

18. Dispositif selon la revendication 16 ou 17 **caractérisé en ce qu'**il comprend des coulisseaux (120,121) amenant les réceptacles de la positon d'attente à la position de maintien, les coulisseaux étant montés coulissant sur la colonne support (109).

19. Dispositif selon l'une quelconque des revendications 1 à 18, **caractérisée en ce qu'**il comprend un sous ensemble de rehausse (22, 76), comprenant des moyens de rehausse de type vérin (26, 79, 108a), du bâti support (28, 80, 109) des moyens de maintien, destinés à régler la hauteur du bâti support.

20. Installation d'arrachage de pannes, **caractérisé en ce qu'**elle comprend au moins un dispositif d'arrachage des pannes, au moins un dispositif de maintien (18, 75, 105) selon l'une quelconque des revendications 1 à 19, le dispositif de maintien étant solidaire du bâti de support (1) du dispositif d'arrachage (14) des pannes par l'intermédiaire d'un bâti de raccord (20) du type poutre longitudinale, ou séparé du bâti de support (1) du dispositif d'arrachage (14).

21. Installation selon la revendication 20, **caractérisée en ce qu'**elle comprend des moyens de commande et l'asservissement du déplacement du dispositif de maintien et du dispositif d'arrachage, apte à permettre un déplacement séquentiel ou simultané des moyens d'arrachage et des moyens de maintien.

22. Installation selon l'une quelconque des revendications 20 ou 21, **caractérisée en ce qu'**elle comprend des moyens de commande du déplacement des moyens de maintien et des moyens d'arrachage, tels que l'on commence l'arrachage des pannes une fois que les moyens de maintien s'appliquent contre la carcasse.

23. Installation selon l'une quelconque des revendications 20 à 22, **caractérisée en ce que** le dispositif de maintien et le dispositif d'arrachage se positionnent de façon optimale pour l'arrachage, la position optimale étant déterminée en fonction de la longueur de l'animal.

24. Procédé pour arracher au moins un morceau d'un amas de graisse en forme de couche située sous la peau du corps d'un animal abattu éviscéré, découpé en deux demi-carcasses reliées par la tête, plus spécialement la panne d'un porc, mettant en oeuvre une installation selon l'une quelconque des revendications 20 à 23 dans lequel :
- on positionne l'animal découpé en deux demi-carcasses au regard, du côté ventral, d'un dispositif d'arrachage des pannes en position inactive, et du côté dorsal, d'un dispositif de maintien (18, 75) en position inactive d'attente ;
- on amène le dispositif d'arrachage des pannes à venir en position d'arrachage des pannes, on amène le dispositif de maintien à passer dans une position active dans laquelle les moyens de maintien sont appliqués contre les deux demi-carcasses, de manière à rapprocher et maintenir les deux demi-carcasses, sensiblement dans leur position précédant la découpe de la carcasse en deux demi-carcasses, et suffisamment fortement pour permettre l'arrachage approprié des pannes ;
- on actionne les moyens d'arrachage en réalisant un déplacement relatif des moyens d'arrachage et des deux demi-carcasses, les moyens de maintien restant en position active de maintien;
- on retire, une fois l'arrachage terminé, en les ramenant en position inactive initiale, le dispositif d'arrachage et le dispositif de maintien ;
- on évacue les deux demi-carcasses dont les pannes ont été arrachées, pour pouvoir traiter la carcasse suivante.

25. Procédé selon la revendication 24, **caractérisé en ce que** le retour à la position inactive et le désengagement des moyens de maintien (32,33,70,83,84) est effectué simultanément au ou après le retrait du dispositif d'arrachage (14).

26. Procédé selon la revendication 24 ou 25, **caractérisé en ce que** on commande le début de l'arrachage en fonction de l'application du dispositif de maintien (32,33), l'arrachage commençant lorsque les moyens de maintien sont appliqués de manière à maintenir en position l'animal suffisamment fermement pour l'arrachage à l'encontre de la poussée du dispositif d'arrachage (14), le dispositif de maintien et le dispositif d'arrachage étant amenés dans une position optimale pour l'arrachage qui est fonction de la longueur de la carcasse.

27. Procédé selon l'une quelconque des revendications 24 à 26, **caractérisé en ce que** l'on maintient sensiblement stationnaire le corps de l'animal lors de l'arrachage, le procédé étant à poste fixe, ou au contraire on déplace le corps de l'animal, le procédé pouvant être alors à poste mobile.

28. Procédé selon l'une quelconque des revendications 24 à 27, **caractérisé en ce que** l'on commande le déplacement du dispositif de maintien indépendamment de celui du dispositif d'arrachage, et l'actionnement des moyens de maintien indépendamment de l'actionnement des moyens d'arrachage.

## Claims

1. A device (18) for holding during the stripping of a mass of fat in the form of a layer situated under the skin of the body of a slaughtered animal, opened and eviscerated, more especially the fat (6) on a pig, the device being intended to form part of a fat-stripping installation, in which the animal is cut into two half-carcasses kept integral by at least part of the body, particularly at the head (8), the animal being suspended by the hind legs, the head downwards, **characterised in that** the said device (18) comprises, on the dorsal side of the carcass (4), a support frame (28, 80) carrying on each side of the carcass means (32, 33, 83, 84) of holding the two half-carcasses spaced apart and fixed in an articulated fashion to the frame, able to move between a first so-called waiting position in which the holding means are free with respect to the carcass, and a second so-called holding position in which these holding means are in abutment on each side of the carcass, and are substantially symmetrical with respect to the plane of symmetry of the carcass.

2. A device according to Claim 1, **characterised in that** the holding means comprise two arched arms (32, 33) whose convexity is turned towards the plane of symmetry, so as to be pressed against the external face of the lateral flanks of the half-carcasses in the holding position.

3. A device according to Claim 2, **characterised in that** the holding means also comprise means (70) of retaining the head in the holding position, of the type consisting of arms forming hooks introduced between the half-carcasses, or holding plates applied on each side of the half-carcasses.

4. A device according to any one of Claims 1 to 3, **characterised in that** the holding means (32, 33) are articulated on respective axes which lie in a support plane parallel to or inclined with respect to the plane perpendicular to the plane of symmetry of the carcass, and which are inclined in this support plane by an angle of between 20° and 40° with respect to the perpendicular to the plane of symmetry.

5. A device according to any one of Claims 1 to 4, **characterised in that** the support frame (28) comprises a longitudinal beam extending along a frame axis (38) included in the plane of symmetry and parallel to the support plane, the frame axis (38) being fixed or with an inclination adjustable by 10° to 30° with respect to the vertical plane perpendicular to the plane of symmetry.

6. A device according to any one of Claims 1 to 5, **characterised in that** the axes (36, 37) of the arms (32, 33) are situated on the side (28a) of the support frame (28) situated opposite the dorsal face of the carcass.

7. A device according to any one of Claims 1 to 6, **characterised in that** it comprises means forming a lever (45, 46) intended for the pivoting of the holding arms (32, 33) with respect to the articulation axes (35, 36) of these arms.

8. A device according to Claim 7, **characterised in that** the means forming a lever (45, 46) are actuated by single- or double-acting cylinders (57, 58), mounted on the support frame (28), able to bring the arms by lever effect from the first to the second position.

9. A device according to Claim 8, **characterised in that** the cylinders (45, 46) are mounted on pivot axes (68, 69) parallel to the plane of symmetry, the cylinders pivoting angularly about these axes when passing from the first to the second position through an angle of around 5° to 20°.

10. A device according to Claim 9, **characterised in that** the rods (59, 60) of the cylinders are able to move towards the top or towards the bottom of the holding device.

11. A device according to any one of Claims 3 to 10, **characterised in that** the bottom hook (70) is mounted articulated on the bottom end part of the support frame, and moves by approximately 90° between the first and the second position, the bottom arm comprising an elbow holding the head of the animal.

12. A device according to Claim 2, **characterised in that** the holding means (83, 84) are articulated on respective vertical axes (90, 91) which lie in a pivot plane perpendicular to the plane of symmetry.

13. A device according to Claim 12, **characterised in that** the holding arms are actuated by cylinders (92, 93) whose axes (99, 100) are horizontal and inclined by 40° to 50° with respect to the plane of symmetry.

14. A device according to either one of Claims 12 or 13, **characterised in that** the holding device (75) comprises a longitudinal heightening cover (78) which supports a column (80) forming a support frame for the holding arms (83, 84) and comes into abutment through a face (89) against the dorsal face of the two half-carcasses (85a, 86a) close to the vertebral column when the two half-carcasses are brought together under the action of the holding arms, the column supporting the vertical pivot axes (90, 91) of the holding arms.

15. A device according to Claim 14, **characterised in that** the column (80) extends parallel to the direction of the cover (78), has a substantially trapezoidal overall cross-section and supports a partition (87) for the vertical separation of the half-carcasses (85, 86) brought together under the effect of the holding arms in the holding position.

16. A device according to Claim 2, **characterised in that** the holding means comprise a first receptacle (110) for one half-carcass (85) and a second receptacle for the other half-carcass (86), the receptacles (110, 111) being intended for holding the half-carcasses when the fat is being pulled off, the receptacles being mounted on a column (109) forming a support frame.

17. A device according to Claim 16, **characterised in that** the receptacles are articulated on each other, the receptacles comprising a first wall (112, 113) with its convexity turned towards the plane of symmetry and a second substantially flat wall (114, 115) articulated with the first wall (112, 113), the second wall (114) of the first receptacle (110) being articulated with the first wall (113) of the second receptacle (111) and forming with it a separation partition between the half-carcasses.

18. A device according to Claim 16 or 17, **characterised in that** it comprises slides (120, 121) bringing the receptacles from the waiting position to the holding position, the slides being mounted so as to slide on the support column (109).

19. A device according to any one of Claims 1 to 18, **characterised in that** it comprises a raising subassembly (22, 76), comprising raising means of the cylinder type (26, 79, 108a), for the support frame (28, 80, 109) for the holding means, intended to adjust the height of the support frame.

20. A fat-stripping installation, **characterised in that** it comprises at least one fat-stripping device and at least one holding device (18, 75, 105) according to any one of Claims 1 to 19, the holding device being fixed to the support frame (1) of the fat stripping device (14) by means of a connecting frame (20) of the longitudinal beam type, or separated from the support frame (1) of the stripping device (14).

21. An installation according to Claim 20, **characterised in that** it comprises means of controlling and slaving the movement of the holding device and stripping device, able to allow a sequential or simultaneous movement of the stripping means and holding means.

22. An installation according to either one of Claims 20 or 21, **characterised in that** it comprises means of controlling the movement of the holding means and stripping means, such that the stripping of the fat is commenced once the holding means are applied against the carcass.

23. An installation according to any one of Claims 20 to 22, **characterised in that** the holding device and the stripping device are positioned optimally for the stripping, the optimum position being determined according to the length of the animal.

24. A method for stripping at least one piece of a mass of fat in the form of a layer situated under the skin of the body of an eviscerated slaughtered animal, cut into two half-carcasses connected by the head, more especially the fat of a pig, using an installation according to any one of Claims 20 to 23, in which:
- the animal cut into two half-carcasses is positioned opposite, on the ventral side, a fat-stripping device in the inactive position and, on the dorsal side, a holding device (18, 75) in the inactive waiting position;
- the fat-stripping device is caused to come into the fat-stripping position, the holding device is caused to pass into an active position in which the holding means are applied against the two half-carcasses, so as to bring together and hold the two half-carcasses substantially in their position preceding the cutting of the carcass into two half-carcasses, and sufficiently strongly to allow the appropriate stripping of the fat;
- the stripping means are actuated by making a relative movement of the stripping means and the two half-carcasses, the holding means remaining in the active holding position;
- once the stripping has ended, the stripping device and the holding device are withdrawn, returning them to the initial inactive position;
- the two half-carcasses whose fat has been stripped are discharged in order to be able to process the following carcass.

25. A method according to Claim 24, **characterised in that** the return to the inactive position and the disengagement of the holding means (32, 33, 70, 83, 84) are effected simultaneously with or after the withdrawal of the stripping device (14).

26. A method according to Claim 24 or 25, **characterised in that** the start of the stripping is controlled according to the application of the holding device (32, 33), the stripping commencing when the holding means are applied so as to hold the animal sufficiently firmly in position for the stripping counter to the thrust of the stripping device (14), the holding device and the stripping device being brought into an optimum position for the stripping which is a function of the length of the carcass.

27. A method according to any one of Claims 24 to 26, **characterised in that** the body of the animal is held substantially stationary during the stripping, the method being of the fixed station type, or on the contrary the body of the animal is moved, the method then being able to be of the moving station type.

28. A method according to any one of Claims 24 to 27, **characterised in that** the movement of the holding device is controlled independently of that of the stripping device, and the actuation of the holding means independently of the actuation of the stripping means.

## Patentansprüche

1. Haltevorrichtung (18) beim Abreißen einer schichtförmigen Fettmasse, die sich unter der Körperhaut eines geschlachteten, geöffneten und ausgenommenen Tieres befindet, insbesondere des Floms (6) eines Schweins, wobei die Vorrichtung zum Einbau in eine Flomabreißanlage bestimmt ist, in der das Tier in zwei Halbgerippe zerteilt wird, die an zumindest einem Teil des Körpers, insbesondere am Kopf (8), zusammengehalten werden, wobei das Tier mit nach unten gerichtetem Kopf an den Hinterbeinen aufgehängt ist, **dadurch gekennzeichnet, dass** die besagte Vorrichtung (18) auf der Rückenseite des Gerippes (4) einen Tragrahmen (28, 80) umfasst, der auf beiden Seiten des Gerippes Haltemittel (32, 33, 83, 84) der beiden Halbgerippe trägt, die in einem Abstand zueinander und gelenkig am Rahmen befestigt sind und zwischen einer ersten sogenannten Warteposition, in der die Haltemittel in Bezug auf das Gerippe frei sind, und einer zweiten sogenannten Halteposition, in der diese Haltemittel sich an beiden Seiten des Gerippes abstützen, verfahren werden können, und die etwa symmetrisch in Bezug auf die Symmetrieebene des Gerippes sind.

2. Vorrichtung nach Anspruch 1, **dadurch gekennzeichnet, dass** die Haltemittel zwei gebogene Arme (32, 33) umfassen, deren Konvexität zur Symmetrieebene hin gerichtet ist, so dass sie sich in der Halteposition gegen die Außenseite der seitlichen Flanken des Halbgerippes abstützten.

3. Vorrichtung nach Anspruch 2, **dadurch gekennzeichnet, dass** die Haltemittel ferner Rückhaltmittel (70) des Kopfs in Halteposition umfassen, in Form von Haken bildenden Armen, die zwischen den Halbgerippen eingeführt werden, oder von Halteplatten, die auf beiden Seiten der Halbgerippe angelegt werden.

4. Vorrichtung nach einem der Ansprüche 1 bis 3, **dadurch gekennzeichnet, dass** die Haltemittel (32, 33) gemäß jeweiligen Achsen angelenkt sind, die sich auf einer Tragebene erstrecken, die parallel oder schräg in Bezug auf die Ebene verläuft, die sich quer zur Symmetrieebene des Gerippes erstreckt, und die auf dieser Tragebene in einem Winkel zwischen 20 und 40° in Bezug auf die Senkrechte zur Symmetrieebene geneigt sind.

5. Vorrichtung nach einem der Ansprüche 1 bis 4, **dadurch gekennzeichnet, dass** der Tragrahmen (28) einen Längsbalken umfasst, der sich gemäß einer Rahmenachse (38) innerhalb der Symmetrieebene und parallel zur Tragebene erstreckt, wobei die Rahmenachse (38) fest ist oder zwischen 10° und 30° in Bezug auf die zur Symmetrieebene lotrechte Senkrechtebene schräg gestellt werden kann.

6. Vorrichtung nach einem der Ansprüche 1 bis 5, **dadurch gekennzeichnet, dass** sich die Achsen (36, 37) der Arme (32, 33) auf der Seite (28a) des Tragrahmens (28) befinden, die gegenüber der Rückenseite des Gerippes angeordnet ist.

7. Vorrichtung nach einem der Ansprüche 1 bis 6, **dadurch gekennzeichnet, dass** sie einen Hebel (45, 46) bildende Mittel zum Verschwenken der Haltearme (32, 33) in Bezug auf die Gelenkachsen (35, 36) dieser Arme umfasst.

8. Vorrichtung nach Anspruch 7, **dadurch gekennzeichnet, dass** die einen Hebel (45, 46) bildenden Mittel von auf dem Tragrahmen (28) montierten Zylindern (57, 58) mit Einfachoder Doppelwirkung betätigt werden, die die Arme durch Hebelwirkung aus der ersten in die zweite Position versetzen können.

9. Vorrichtung nach Anspruch 8, **dadurch gekennzeichnet, dass** die Zylinder (45, 46) auf parallel zur Symmetrieebene angeordneten Drehachsen (68, 69) montiert sind, wobei sich die Zylinder beim Übergang von der ersten in die zweite Position in einem Winkel von etwa 5 bis 20° um diese Achsen drehen.

10. Vorrichtung nach Anspruch 9, **dadurch gekennzeichnet, dass** die Stangen (59, 60) der Zylinder nach oben oder unten der Haltevorrichtung mobil sind.

11. Vorrichtung nach einem der Ansprüche 3 bis 10, **dadurch gekennzeichnet, dass** der untere Haken (70) gelenkig am unteren äußersten Teil des Tragrahmens montiert ist und sich um etwa 90° zwischen der ersten und der zweiten Position verschiebt, wobei der untere Arm eine Krümmung aufweist, die den Kopf des Tieres festhält.

12. Vorrichtung nach Anspruch 2, **dadurch gekennzeichnet, dass** die Haltemittel (83, 84) gemäß jeweiligen Senkrechtachsen (90, 91) angelenkt sind, die sich auf einer in Bezug auf die Symmetrieebene lotrechten Drehebene erstrecken.

13. Vorrichtung nach Anspruch 12, **dadurch gekennzeichnet, dass** die Haltearme von Zylindern (92, 93) betätigt werden, deren Achsen (99, 100) horizontal und um 40 bis 50° schräg zur Symmetrieebene verlaufen.

14. Vorrichtung nach einem der Ansprüche 12 oder 13, **dadurch gekennzeichnet, dass** die Haltevorrichtung (75) eine längliche Erhöhungshaube (78) umfasst, die eine für die Haltearme (83, 84) einen Tragrahmen bildende Stütze (80) trägt und sich mit einer Seite (89) gegen die Rückenseite der beiden Halbgerippe (85a, 86a) in der Nähe der Wirbelsäule abstützt, wenn die beiden Halbgerippe durch die Aktion der Haltearme angenähert werden, wobei die Stütze die senkrechten Drehachsen (90, 91) der Haltearme trägt.

15. Vorrichtung nach Anspruch 14, **dadurch gekennzeichnet, dass** sich die Stütze (80) parallel zur Richtung der Haube (78) erstreckt, einen im Allgemeinen etwa trapezförmigen Querschnitt aufweist und eine vertikale Trennwand (87) der unter der Wirkung der Haltearme angenäherten Halbgerippe (85, 86) in Halteposition trägt.

16. Vorrichtung nach Anspruch 2, **dadurch gekennzeichnet, dass** die Haltemittel eine erste Aufnahme (110) für ein Halbgerippe (85) und eine zweite Aufnahme für das andere Halbgerippe (86) umfassen, wobei die Aufnahmen (110, 111) zum Festhalten der Halbgerippe bei Abreißen der Pelze bestimmt sind, wobei die Aufnahmen auf eine einen Tragrahmen bildende Stütze (109) montiert sind.

17. Vorrichtung nach Anspruch 16, **dadurch gekennzeichnet, dass** die Aufnahmen aneinander angelenkt sind, wobei die Aufnahmen eine. erste Wand (112, 113) mit zur Symmetrieebene hin gerichteter Konvexität und eine zweite etwa ebene, an die erste Wand (112, 113) angelenkte Wand (114, 115) umfassen, wobei die zweite Wand (114) der ersten Aufnahme (110) an die erste Wand (113) der zweiten Aufnahme (111) angelenkt ist und mit ihr eine Trennwand zwischen den Halbgerippen bildet.

18. Vorrichtung nach Anspruch 16 oder 17, **dadurch gekennzeichnet, dass** sie Schlitten (120, 121) umfasst, die die Aufnahmen aus der Warteposition in die Halteposition versetzen, wobei die Schlitten gleitend auf die Tragstütze (109) montiert sind.

19. Vorrichtung nach einem der Ansprüche 1 bis 18, **dadurch gekennzeichnet, dass** sie eine Überhöhungsanordnung (22, 76) umfasst, die Erhöhungsmittel des Typs Zylinder (26, 79, 108a) des Tragrahmens (28, 80, 109) der Haltemittel aufweist, um die Höhe des Tragrahmens einzustellen.

20. Flomabreißanlage, **dadurch gekennzeichnet, dass** sie mindestens eine Abreißvorrichtung der Flome und mindestens eine Haltevorrichtung (18, 75, 105) nach einem der Ansprüche 1 bis 19 umfasst, wobei die Haltevorrichtung über einen Anschlussrahmen (20) des Typs Längsbalken fest mit dem Tragrahmen (1) der Abreißvorrichtung (14) verbunden oder vom Tragrahmen (1) der Abreißvorrichtung (14) getrennt ist.

21. Anlage nach Anschluss 20, **dadurch gekennzeichnet, dass** sie Steuer- und Regelmittel der Verschiebung der Haltevorrichtung und der Abreißvorrichtung umfasst, die eine sequentielle oder gleichzeitige Verschiebung der Abreißmittel und der Haltemittel ermöglichen.

22. Anlage nach einem der Ansprüche 20 oder 21, **dadurch gekennzeichnet, dass** sie Steuermittel der Verschiebung der Haltemittel und der Abreißmittel umfasst, so dass mit dem Abreißen der Flome erst dann begonnen wird, wenn die Haltemittel gegen das Gerippe angelegt sind.

23. Anlage nach einem der Ansprüche 20 bis 22, **dadurch gekennzeichnet, dass** die Haltevorrichtung und die Abreißvorrichtung sich optimal für das Abreißen positionieren, wobei die optimale Position je nach Länge des Tieres festgelegt wird.

24. Verfahren zum Abreißen mindestens eines Stücks einer schichtförmigen Fettmasse, die sich unter der Körperhaut eines geschlachteten, ausgenommenen, in zwei durch den Kopf verbundene Halbgerippe zerteilten Tieres befindet, insbesondere des Floms eines Schweins, bei dem eine Anlage nach einem der Ansprüche 20 bis 23 eingesetzt wird, und bei dem man:
- das in zwei Halbgerippe zerteilte Tier bauchseitig gegenüber einer Flomabreißvorrichtung in nicht aktiver Position und rückenseitig gegenüber einer Haltevorrichtung (18, 75) in nicht aktiver Warteposition positioniert;
- die Flomabreißvorrichtung in Flomabreißposition bringt und man die Haltevorrichtung in eine aktive Position versetzt, in der die Haltemittel gegen die beiden Halbgerippe angelegt sind, so dass die beiden Halbgerippe etwa in ihrer Position vor dem Zerteilen des Gerippes in zwei Halbgerippe angenähert und festgehalten werden, und zwar stark genug, um das geeignete Abreißen der Flome zu ermöglichen;
- die Abreißmittel durch eine relative Versetzung der Abreißmittel und der beiden Halbgerippe betätigt, wobei die Haltemittel in aktiver Halteposition bleiben;
- die Abreißvorrichtung und die Haltevorrichtung nach Beendigung des Abreißens zurückzieht, indem man sie in die ursprüngliche nicht aktive Position versetzt;
- die beiden Halbgerippe, von denen die Flome abgezogen wurden, abtransportiert, um das nächste Gerippe bearbeiten zu können.

25. Verfahren nach Anspruch 24, **dadurch gekennzeichnet, dass** die Rückkehr in die nicht aktive Position und das Ablösen der Haltemittel (32, 33, 70, 83, 84) gleichzeitig oder nach dem Rückzug der Abreißvorrichtung (14) erfolgen.

26. Verfahren nach Anspruch 24 oder 25, **dadurch gekennzeichnet, dass** man den Beginn des Abreißens je nach Anlegen der Haltevorrichtung (32, 33) steuert, wobei das Abreißen beginnt, wenn die Haltemittel so angelegt sind, dass sie das Tier für das Abreißen gegen den Schub der Abreißvorrichtung (14) stark genug festhalten, wobei die Haltevorrichtung und die Abreißvorrichtung in eine optimale Position für das Abreißen gebracht werden, die Funktion der Länge des Gerippes ist.

27. Verfahren nach einem der Ansprüche 24 bis 26, **dadurch gekennzeichnet, dass** man den Körper des Tieres beim Abreißen in einer etwa ortsfesten Position festhält, da das Verfahren mit festem Posten arbeitet, oder dass man den Körper des Tieres versetzt, wobei das Verfahren dann mit mobilem Posten arbeitet.

28. Verfahren nach einem der Ansprüche 24 bis 27, **dadurch gekennzeichnet, dass** man die Verschiebung der Haltevorrichtung unabhängig von derjenigen der Abreißvorrichtung und die Betätigung der Haltemittel unabhängig von der Betätigung der Abreißmittel steuert.
